# EUROPEAN PATENT APPLICATION

(11) **EP 1 352 558 A2**
(43) Date of publication of application: **15.10.2003**
(21) Application number: 03007523.8
(22) Date of filing: 01.04.2003
(51) Int. Cl.: A01J 5/08

(54) **Sheath for milking plants**

(30) Priority: 11.04.2002 IT MI20020199
(71) Applicant: INTERPULS S.P.A., 42020 Albinea, Reggio Emilia (IT)
(72) Inventor: Nicolini, Gabriele, 42020 Fabbrico, Reggio Emilia (IT); Sicuri, Roberto, 43100 Parma (IT)
(74) Representative: Giambrocono, Alfonso, Dr. Ing.

(57) **Abstract**

The sheath (10) for milking units comprises a head (12), a hollow body (14) and a short milk tube (16). Downstream of the space occupied by the teat, the hollow body (14) presents a portion (22) with a cross-section of ovoidal shape which blends, both upstream (18) and downstream (20), into the remaining parts of the hollow body (14), these maintaining a circular cross-section. The short milk tube (16) can also present externally, in an intermediate position, an annular groove (24) of curved profile.

## Description

The present invention relates to the sheaths of a milking unit in a milking plant.

In the milking plant sector the known art recognizes and testifies to the importance of the function performed by the sheaths of a milking unit, into each of which a teat of the animal to be milked is inserted. "Good" milking is also synonymous with a "good" sheath, especially with regard to its type of constituent material and its characteristic geometry. In particular:
- the sheath material must be such that the mechanical massaging action which the sheath exerts on the animal's teat must not alter the cutaneous integrity of the teat with the passage of time;
- the geometry chosen for the sheath must not penalize the yield and quality of the milking operation nor the time which it takes.

In particular, with regard to the sheath geometry or configuration, the following can be distinguished:
- a head, comprising the mouth into which the teat is inserted;
- a slightly frusto-conical hollow body, one end of which is integral with the head, this body forming the intermediate part of the sheath (that mostly involved in the milking), which is enclosed within the relative tube casing;
- a short milk tube, integral with the hollow body, which enables the newly obtained milk to flow into the manifold of the milking unit, one end of this tube being integral with that end of the sheath body distant from the head, the other end of the tube being pressure-mounted onto one of the four rigid nozzles (also known in this sector as nipples) of the milk manifold, to form a sealed connection.

The body is the most important part of the sheath, in that:
- It is in contact with the skin of the animal's teat, and hence responsible for its physical integrity with time.
- It impresses its reciprocating movement on the teat, to materially effect the milking operation, this latter directly influencing the animal's productivity.

In greater detail, the milking operation or cycle consists of four separate phases which are known to every expert of the art and will now be briefly described:
- phase "A" is the first and constitutes the transient phase in which the plant pulsator connects the chamber defined by a tube casing and relative sheath to the vacuum line. Atmospheric pressure initially exists in this chamber, the body of the sheath being contracted against itself and about the teat housed in its interior, the contraction being determined by the fact that inside the sheath there is always the level of milking vacuum previously set for the plant, and constantly fed via the manifold and, in its turn, via the milk line. With the progressive increase of vacuum in said chamber, the sheath gradually distends until it assumes its natural configuration in which the body of the sheath is undeformed.
- At this point phase "B" begins, this being known as the milking phase in that milk is extracted from the teat by opening its sphincter by the action of the vacuum within the sheath.
- The next phase is phase "C", in which the pulsator progressively feeds atmospheric air into said chamber. This results in gradual contraction of the sheath, until it makes contact against the teat and becomes closed within that portion immediately below the teat.
- The final phase is phase "D", in which the sheath partly adheres to the teat and is partly (downstream of the teat) closed against itself. This isolates the teat from the short milk tube, in which vacuum is constantly present; hence under these conditions the teat is at a pressure higher than that present in the rest of the milking unit, this favouring blood circulation; for this reason this phase is also known as the "massaging phase", and is very important for the animal's health, in that poor blood circulation can generate mastitis and serious teat dysfunction.

From the aforegoing it is apparent that proper closure of the sheath, by squeezing its body downstream of the teat, during the massage phase "D" is fundamental for the physical integrity of the animal to be milked.

An object of the present invention is to provide a sheath the body of which, besides ensuring proper closure in the aforestated sense, is able to close against itself, downstream of the space occupied by the teat, more quickly than with known sheaths, this enabling a longer lasting massaging phase "D" to be obtained, resulting in a greater blood quantity recirculated within the teat, to the total advantage of the physical integrity of the animal's teats and its health.

As the constituent material of the sheath (a rubber suitable for contact with foods) is subject to ageing with time, causing its elasticity to decrease, it follows that in the long term there is no longer proper closure of the sheath body against itself during phase "D". During phase "D" there is consequently poor isolation of the teat from the vacuum source. Moreover the ageing of the sheath material, together with the significant deformation undergone by the sheath body due to its squeezing against itself, result in yielding of the most outer part of the wall of the sheath body, until it tears.

Another object of the present invention is therefore to provide a sheath which is less influenced by the ageing of its constituent material, so as to obtain proper closure of body downstream of the teat, even when the material has aged.

These objects are attained by the sheath of the present invention, characterised in that its hollow body downstream of the space occupied by the teat of the animal to be milked presents a portion with a cross-section of ovoidal shape which blends, both upstream and downstream, into the remaining parts of the hollow body, these maintaining a circular cross-section.

This enables the following results to be obtained:
- it has been found that in the portion of ovoidal cross-section, the sheath body closes against itself more quickly than in the case of known sheaths (all of circular cross-section), with the result that the massage phase "D" lengthens considerably;
- the material of that portion in which the sheath body closes against itself undergoes, by virtue of its ovoidal cross-section, a lesser deformation and hence a lesser yielding, with the result that the decrease in elasticity of the material in this portion does not substantially penalize the effectiveness of the closure of this portion against itself; and moreover the external surface lacerations in that portion appear much later in time.

As is well known to the expert of the art, during the milking phase the four tube casings of a milking unit, provided with their sheaths, are applied to the corresponding teats of the animal to be milked, so that these tube casings are substantially vertical and face upwards, above the milk manifold. Consequently the four short milk tubes leaving the corresponding tube casings extend downwards towards the manifold, slightly converging, to then connect to the relative nipple of this latter.

On termination of the milking phase, the tube casings are removed from the respective teats and then left free (awaiting the next milking operation), Consequently, because of its weight, the tube casing with its sheath hangs downwards, supported in practice by just the short milk tube which forms part of the relative sheath (the short pulsation tube, which puts the interspace between the sheath body and the tube casing under vacuum, makes only a limited contribution in this respect). In known sheaths, when in this condition it is of fundamental importance that when each short milk tube folds downwards, it perfectly seals the relative nipple, seeing the particular flute mouthpiece shape of the manifold nipple. If this were not to happen, a considerable quantity of atmospheric air would be drawn through the sheath as the manifold is under vacuum, and which would be contaminated (because of the type of environment), this resulting in quality penalization of the milk just obtained (this being equivalent to a considerable reduction in its commercial value).

Another considerable drawback caused by the imperfect sealing of the nipple is the consequent reduction in the useful vacuum reserve of the milking plant, a considerable energy cost being involved in restoring this reserve.

Consequently, because of the fact that between one milking operation and the next (pause stage), the short milk tube folds downwards, with the free end of the nipple pressing against the inner wall of the short milk tube to ensure its sealing and prevent entry of contaminated environmental air into the manifold, in known sheaths the short milk tube must present, in proximity to that end thereof mounted on the nipple, a good mechanical resistance to laceration with time. In this respect, the action of the nipple in the long term causes local surface deterioration of the material of the short milk tube.

Italian utility model application MI2002U 000025, of the same proprietor as the present application, enables the aforesaid drawbacks to be obviated by providing, in proximity to that end of each short tube intended to be connected to the relative manifold nipple, yieldable reinforcement means, comprising a projecting outer rib of the same material as the sheat and forming a single piece therewith, this rib being shaped as a helix coaxial to the short tube.

In the aforedescribed sheath of MI2002U 000025, as in the case of known sheaths, the short milk tube is again highly stressed mechanically both adjacent to the relative tube casing, and adjacent to the relative manifold nipple.

A further object of the present invention is therefore to provide a sheath, the short milk tube of which is less stressed than in known sheaths, to hence obtain a longer sheath life.

This latter object is also achieved by the sheath of the present invention, wherein the short milk tube presents externally, in an intermediate position, an annular groove of curved profile. Because of the presence of said groove, when the relative tube casing is free and hangs downwards, the closure of the short milk tube no longer takes place in correspondence with the manifold nipple, but by folding of the short milk tube in correspondence with said groove. By this means, the closure of the short milk tube against itself in correspondence with said groove is obtained with the generation of mechanical stresses in said tube which are decidedly less than those which arise under a like situation in sheaths of known type in correspondence with the nipple. The result is that the short tube of the sheath closes against itself, even with light tube casings, without cracks occurring in the outer surface with the passage of time, this significantly increasing the life of this sheath compared with known sheaths.

Preferably, that end of the short tube close to the tube casing is provided with reinforcement means of the type described in MI2002U 000025, i.e. comprising a projecting outer rib of helical shape, of the same material as the sheath and coaxial to it, and forming a single piece therewith.

The invention will be more easily understood from the ensuing description of one embodiment thereof given by way of example. In this description, reference is made to the accompanying drawings, in which:
Figure 1 is a side view of a sheath according to the present invention;
Figure 2 is a longitudinal section on the line 2-2 of Figure 1;
Figure 3 is a cross-section therethrough on the line 3-3 of Figure 2.

As can be seen from the figures, these show a sheath 10 for a milking unit (not shown) of a milking plant. The sheath 10 is in one piece and comprises: a head 12; a hollow body 14 to be contained in the relative rigid tube casing (not shown); and a short milk tube 16. The head 16 is of conventional type and requires no further comment.

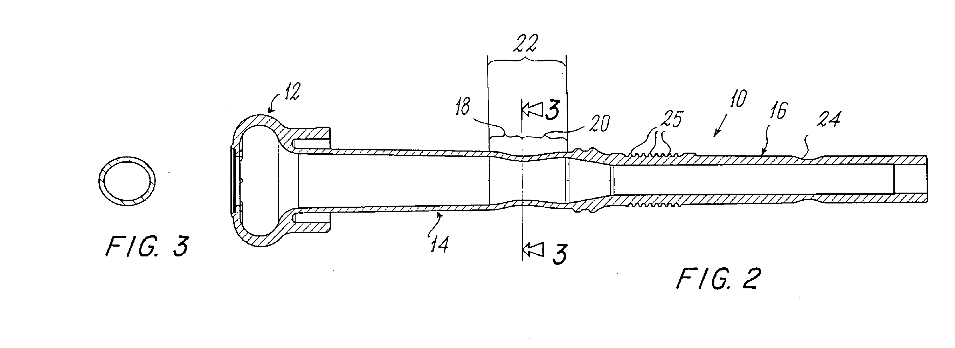

As can be seen from Figures 2 and 3, the hollow body 14 presents in correspondence with the line 3-3 a cross-section which, in this specific case, is elliptical (Figure 3), this elliptical cross-section blending upstream and downstream into the remaining parts of the sheath (which have a circular cross-section) via a connecting portion 18 and a connecting portion 20. It should be immediately noted that the shape of the cross-section on the line 3-3 of Figure 2 can be other than elliptical, and more generally be of ovoid shape, i.e. a shape which facilitates closure against itself of the body 14 within the portion 22 by squeezing, while at the same time ensuring a good seal.

Again, by virtue of the sheath 10, when on termination of the milking operation the operator removes the relative tube casing from the animal's teat and leaves it free, the short milk tube 16 does not close (as happens for known sheaths and also for the sheath of MI2002U 000025) against the relative nipple of the milk manifold. This is because the short milk tube of the sheath 10 presents externally, in an intermediate position, an annular groove 24 which in this specific case has a curved profile. In this manner when the relative tube casing is free and hanging downwards, the short milk tube closes by folding over about itself at the groove 24. This means that the mechanical stresses generated in this tube are decidedly less than those occurring when closure takes place at the nipple of the milking unit.

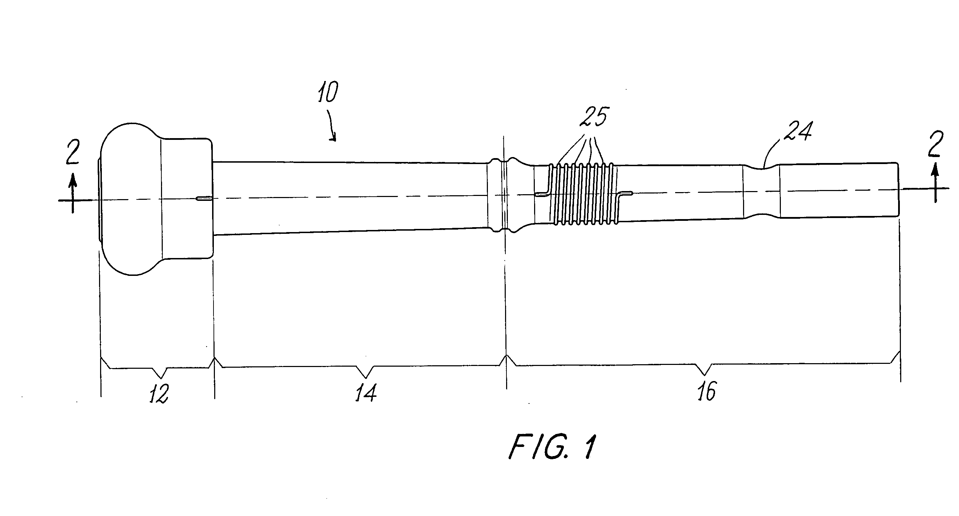

From Figures 1 and 2 it can be seen that the short milk tube 16 presents, in proximity to the sheath body 14, an external helical reinforcement rib 25 of the type described in the aforesaid MI2002U 000025, forming one piece with the rest of the sheath 10.

To conclude, besides enabling a longer massaging phase to be achieved, the sheath 10 has a useful life decidedly longer than the known sheaths. Moreover it ensures during its entire useful life a proper closure both in correspondence with the portion 22 and at the groove 24.

## Claims

1. A sheath (10) for milking units of a milking plant, comprising a head (22) presenting the mouth into which the relative teat of the animal to be milked is inserted, a hollow body, one end of which is integral with the head, and a short milk tube downstream of the other end of the hollow body and integral therewith, **characterised in that** downstream of the space occupied by the teat, the hollow body (14) presents a portion with a cross-section of ovoidal shape which blends, both upstream (18) and downstream (20), into the remaining parts of the hollow body (14), these maintaining a circular cross-section.

2. A sheath (10) as claimed in claim 1, wherein the ovoidal cross-section is of elliptical shape.

3. A sheath (10) as claimed in claim 1, wherein the short milk tube (16) presents externally, in an intermediate position, an annular groove (24) of curved profile.

4. A sheath (10) as claimed in claim 3, wherein the profile of the groove (24) is a circular arc.

5. A sheath (10) as claimed in claim 1, wherein the short milk tube (16) presents, in proximity to the body (14) of the sheath (10), a helical external reinforcement rib (25).
